# EUROPEAN PATENT APPLICATION

(11) **EP 1 502 860 A1**
(43) Date of publication of application: **02.02.2005**
(21) Application number: 04425508.1
(22) Date of filing: 09.07.2004
(51) Int. Cl.: B65B 69/00, B65G 11/10

(54) **An apparatus for transferring loose material**

(30) Priority: 30.07.2003 IT bo20030454
(71) Applicant: Vima Impianti S.r.l., 51010 Pescia (Pistoia) (IT)
(72) Inventor: Bonita, Antonio, 55012 Capannori (Lucca) (IT)
(74) Representative: Lanzoni, Luciano

(57) **Abstract**

The apparatus (1) for transferring loose material (2) from an unloading station (3) located at a first, upper level (L1) to a receiving station (4) located at a second, lower level (L2), comprises a flexible pipe (12) for the passage of the loose material (2), the pipe (12) having an axis (A) of extension and a first end (12a) connected to the unloading station (3) and a second end (12b) connected to the receiving station (4), the apparatus comprising twisting means (34) for the flexible pipe (12), the twisting means (34) being designed to make the ends (12a,12b) of the pipe (12) rotate relative to one another about the pipe axis of extension (A).

## Description

The present invention relates to an apparatus for transferring loose material.

In particular, the present invention relates to an apparatus which can be used in the chemical and/or pharmaceutical and/or food sector and in any other sector which requires the unloading of containers holding loose material, consisting of powders, pellets, tablets, capsules or similar products.

The above-mentioned containers are emptied at an unloading station, located at an upper level, the material contained in the containers is transferred from the unloading station to a collection station located at a lower level. The collection station comprises a receptacle, for example a tank or hopper connected to a treatment unit where the loose material is subject to subsequent processing.

The height difference between the above-mentioned levels is such that it allows the container to be emptied by the action of gravity.

For the loose material to flow from the upper container to the lower receptacle the use of a cylindrical tubular element is known, connecting the two levels. A tubular bag or flexible pipe with its upper and lower ends respectively connected to the unloading outlet of the container and the loading inlet of the receptacle is inserted coaxially in the tubular element.

The container is emptied by the loose material passing through the flexible pipe, which must be connected to both the container and the receptacle in a substantially hermetic fashion, so that no loose material powders can escape. Diffusion of the powders in the environment must be contained as far as possible, above all if the powders consist of chemical compounds or substances that are not easily degradable in the environment and/or constitute a potential health risk.

An important problem is the possibility that the loose material, as it passes from the upper container to the lower tank through the above-mentioned flexible pipe, which is normally very long, may lose its homogeneity due to separation of its components.

This disadvantage is particularly bad when the material consists of powders; indeed, separation or demixing of the various components of which the powders are constituted may easily occur when a significant mass of powder rapidly falls along the flexible pipe.

Another disadvantage linked to rapid passage through the flexible pipe is the possibility that pellets or tablets may deteriorate due to the excessive speed reached at the end of the pipe.

To overcome the above-mentioned disadvantages, systems have been produced in which, before the interception parts located at the upper container outfeed are opened, part of the flexible pipe is blocked by a clamping part designed to slide vertically in both directions along the flexible pipe. When the container outfeed interception parts are opened, the mass of loose material which enters the flexible pipe does not suddenly travel the considerable drop between the upper container and the lower receptacle. Instead, it stops immediately at the narrowing in the flexible pipe caused by the clamping part. The clamping part then begins moving downwards, sliding in contact with the flexible pipe and gradually opening the progressively larger portion of the flexible pipe above it. As a result, the flexible pipe is gradually filled with the loose material, until, when the clamping part arrives close to the lower receptacle, it is definitively opened and the powders can freely begin to flow towards the lower receptacle.

A second type of system designed to overcome the above-mentioned disadvantages has a tubular bag with one end connected to an outfeed opening of the container holding the loose material and the other end connected to the user unit lower down. There is a valve element connected to the outfeed opening, and a plurality of interception elements set at intervals from one another along the length of the bag are connected to the tubular bag. Each interception element is designed to change the size of the passage inside the pipe between a passage closed condition and a maximum opening condition.

The interception elements are activated by respective actuator means so that they gradually open in succession from top to bottom, allowing the loose material to gradually descend along the tubular bag, until it reaches the user unit, under the action of gravity.

Although they guarantee good operation, the known solutions described above are not without disadvantages.

A first disadvantage of the above-mentioned known solutions is the fact that both are characterised by large dimensions in the portion of the system between the upper container and the lower tank.

Another disadvantage is the extreme structural complexity of the known systems, which also require complicated control and command apparatuses for their management.

The aim of the present invention is to provide an apparatus for transferring loose material which is free of the disadvantages listed above and which is, at the same time, functional, easy and economical to make and practical and effective to use.

The technical features of the present invention, in accordance with the above-mentioned aim, are clearly described in the claims herein, in particular claim 1 and, preferably, any of the claims directly or indirectly dependent on claim 1. The advantages of the present invention are more clearly illustrated in the detailed description which follows, with reference to the accompanying drawings, which illustrate a preferred embodiment without limiting the scope of application, and in which:
- Figure 1 is a schematic side elevation view of an apparatus for transferring loose material in accordance with the present invention, during an operating step;
- Figures 2, 3, 4 and 5 are respective side elevation views of the apparatus illustrated in Figure 1 in three different configurations relative to different operating steps.

With reference to the accompanying drawings, the numeral 1 denotes as a whole an apparatus for transferring a loose material 2 from a station 3 for unloading a container not illustrated to a receiving station 4.

The unloading station 3 is located at a first, upper level L1 and the receiving station 4 is located at a second, lower level L2.

A rigid pipe 5, advantageously made of polycarbonate or other transparent material, connects the stations 3 and 4 extending vertically along its central axis A.

The apparatus 1 comprises a supporting structure 6 connected to a portion 7 of a floor made of brickwork or other material.

The accompanying drawings illustrate a non-limiting example in which there is a difference in the height of a material unloading station and a relative receiving station and in which the material is basically transferred by gravity.

At the first level L1 the structure 6 comprises a cup 8 for positioning a container, not illustrated, and, concentric with the cup 8, a first hopper 9 designed to engage in a container access opening.

The first hopper 9 comprises a cylindrical portion 9a which is connected, by an airtight connecting part 10, to an upper end 11a of a first rigid tubular element 11.

At a lower end 11b, longitudinally opposite the upper end 11a, a first end 12a of a flexible pipe 12 is fitted to the first tubular element 11.

The flexible pipe 12 is located inside the rigid pipe 5 and extends longitudinally along the latter's central axis A.

Therefore, the central axis A of the rigid pipe 5 also forms a central axis of extension for the flexible pipe 12.

The first end 12a of the flexible pipe is secured to the first tubular element 11 by an airtight elastic locking ring 13.

A radial clamping clip 14 is mounted on the centre of the elastic ring 13.

A toothed flange 15 is fixed coaxially on the outside of the first tubular element 11.

The toothed flange 15 is rotatably supported by a thrust block 16, in turn supported by a portion 6a of the supporting structure 6.

At the unloading station 3, the apparatus 1 also comprises a motor 17, advantageously of the electric type, with a rotary shaft 18 positioned parallel with the axis A. Alternatively, the motor 17 may be of the pneumatic or hydraulic or another type. A toothed pinion 19 is fitted to the shaft 18, the pinion engaging with the above-mentioned toothed flange 15.

At its upper end 5a, the rigid pipe 5 has an outer edge 20 on which a portion of the elastic ring 13 rests and makes contact.

The rigid pipe 5 also comprises, below the outer edge 20, a ring-shaped portion 21 which is removably attached to the supporting structure 6 to support the pipe 5.

The rigid pipe 5 has a lower end 5b, longitudinally opposite the upper end 5a according to the axis A.

At the lower end 5b, the rigid pipe 5 is fixed to a block 22 which is, in turn, connected to a cylindrical sleeve 23.

The apparatus 1 comprises a second hopper 24 which is rigidly connected to the cylindrical sleeve 23 and is designed to convey the loose material 2 towards a treatment unit or receptacle, schematically illustrated with a block 25 in the accompanying drawings.

Located inside the cylindrical sleeve 23, the apparatus 1 comprises a second rigid tubular element 26.

Similarly to what is described above with reference to the first rigid tubular element 11, a second end 12b of the flexible pipe 12 is fitted to the second rigid tubular element 26.

The second end 12b of the flexible pipe 12 is secured to the second tubular element 26 by an airtight elastic locking ring 13 and a relative radial clamping clip 14 is mounted on the ring 13.

A tubular joint 27 with variable extension is inserted between the second hopper 24 and the second rigid tubular element 26, the joint designed to change its extension along the axis A according to any second tubular element 26 movements along the axis A, as described in more detail below.

Advantageously, the tubular joint 27 with variable extension is an elastic joint.

According to alternative embodiments of the invention which are not illustrated, the elastic joint is substituted by a telescopic joint.

At the block 22 there is a diaphragm part 28 designed to clamp the flexible pipe 12 radially from the outside inwards.

The diaphragm part 28 is of the substantially known type and therefore is only illustrated schematically in the accompanying drawings.

Therefore, for the apparatus 1, the diaphragm part 28 forms means 29 for blocking the flexible pipe 12, designed to clamp the pipe 12.

The apparatus 1 also comprises a unit 30 for sealing the flexible pipe 12, the unit 30 being supported by a vertical supporting column 31, extending from the supporting structure 6.

The sealing unit 30 is designed to engage with the flexible pipe 12 at an intermediate position between the diaphragm part 28 and the second rigid tubular element 26.

The apparatus 1 comprises a control and command unit, schematically illustrated with a block 32 in the accompanying drawings, for managing the apparatus and whose operation is described in greater detail below.

The control and command unit 32 is connected to the electric motor 17.

The toothed flange 15 and the toothed pinion 19 form, for the apparatus 1, means 33 for the transmission of motion between the electric motor 17 and the first tubular element 11.

According to an embodiment of the present invention not illustrated, the transmission means 33 comprise a wheel, fitted to the rotary shaft 18 of the motor 17, in place of the toothed pinion 19, and a flexible transmission part for transmitting motion from the motor 17 to the flange 15, which in this case is not a toothed flange.

The first and second rigid tubular elements 11, 26, together with the motor 17 and the motion transmission means 33 form, for the apparatus 1, flexible pipe 12 twisting means 34.

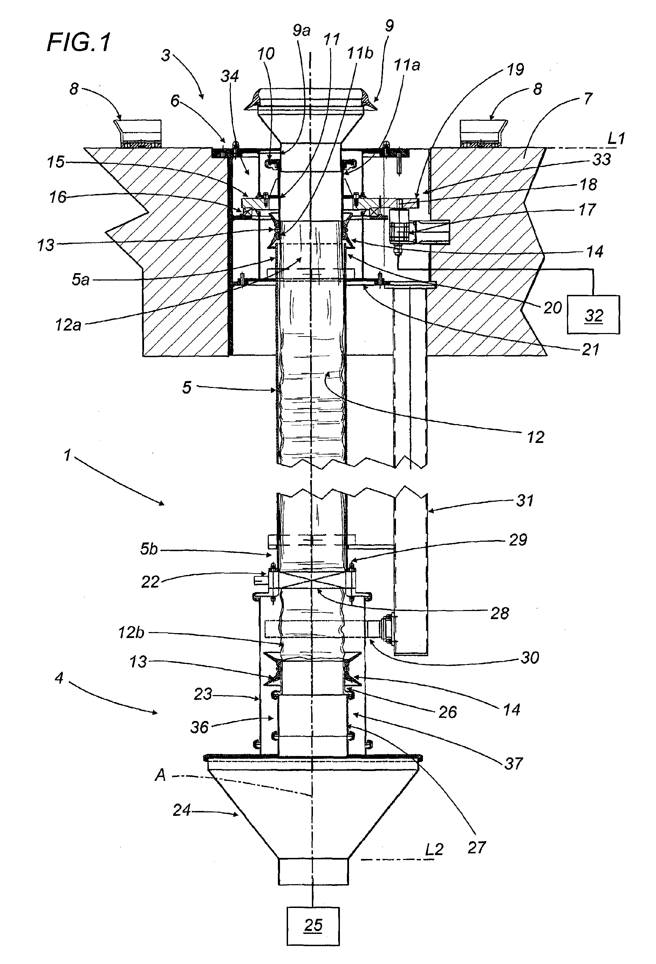

In practice, in the initial configuration illustrated in Figure 1 and according to a substantially known technique, the flexible pipe 12 is inserted inside the rigid pipe 5, with its ends 12a, 12b connected in a airtight fashion respectively to the first and the second tubular elements 11, 26.

Starting with the configuration in Figure 1, the control and command unit 32 activates the electric motor 17 which, by means of the pinion 19 and flange 15, causes the first tubular element 11 to rotate about the axis A, in a first direction of rotation.

During said rotation of the first tubular element 11, the flexible pipe 12, connected to its by its first end 12a, is subjected to twisting which winds it around on itself, gradually reducing its internal volume and cross-section.

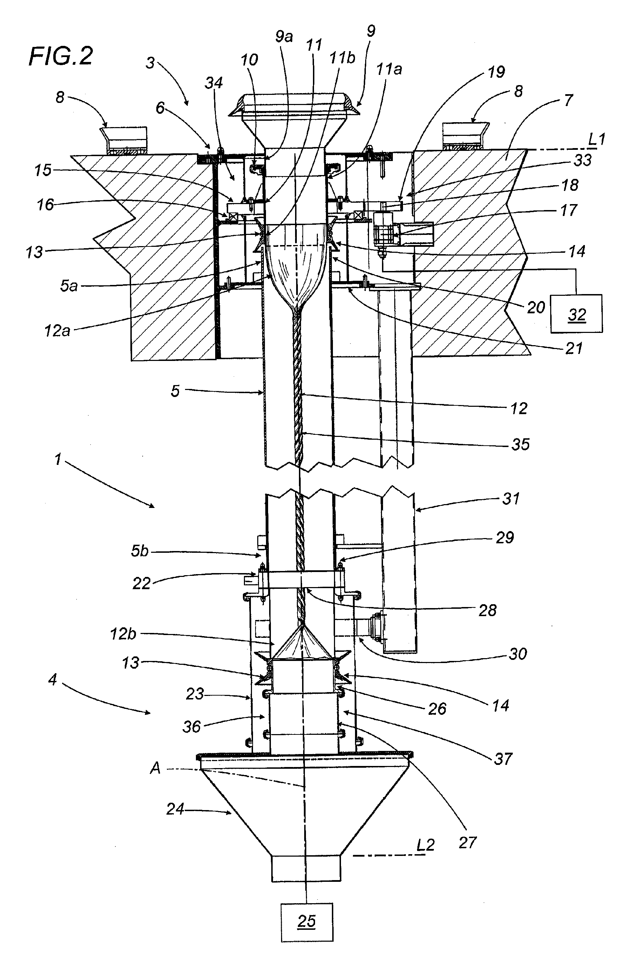

As illustrated in Figure 2, following the relative rotation of the tubular elements 11 and 26, at least one portion 35 of the flexible pipe 12 substantially has the shape of a cord twisted or wound on itself and such that it prevents the passage of any material inside it.

The portion 35 normally starts to form from a central zone of the pipe 12 relative to its longitudinal extension, then extends on both sides towards its ends 12a and 12b.

When the longitudinal extension of the portion 35 reaches a predetermined level, the control and command unit 32 stops the motor 17 and with it rotation of the first tubular element 11.

The diaphragm part 28, advantageously activated by the control and command unit 32, clamps the flexible pipe 12 in the above-mentioned closed configuration in which the passage of any material inside it is inhibited.

The condition just described is substantially that illustrated in Figure 2.

Starting from the configuration illustrated in Figure 2, according to methods that are known and therefore not illustrated or described in detail, the unloading station 3 is supplied with the loose material 2 from a container not illustrated in the accompanying drawings.

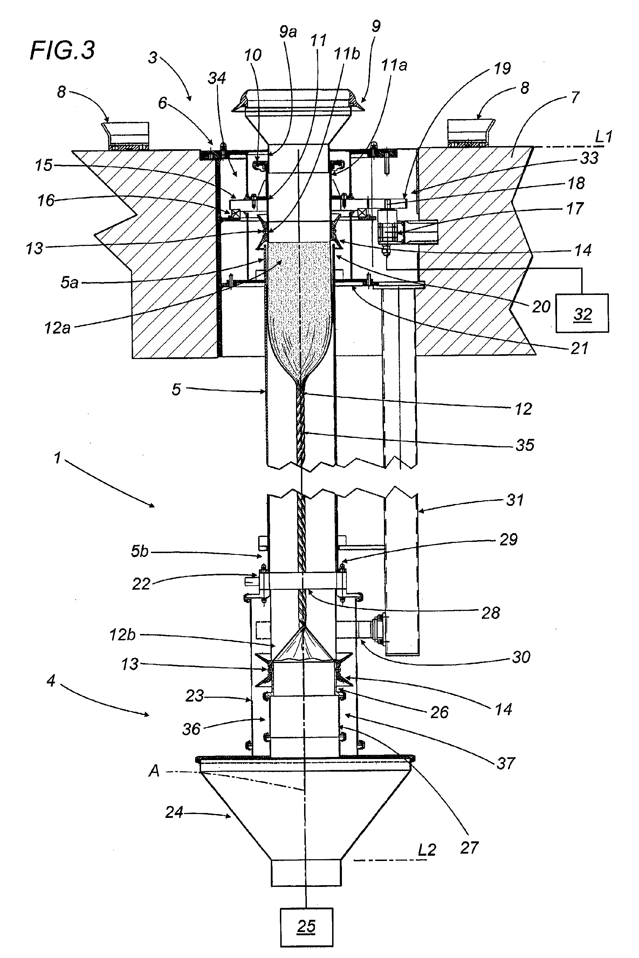

As illustrated in Figure 3, the loose material 2 begins flowing downwards, inside the flexible pipe 12.

Simultaneously with the descent of the material along the flexible pipe 12 and to allow said descent, the control and command unit 32 activates the motor 17 so that, using the transmission means 33, it causes the first tubular element 11 to rotate in a direction of rotation opposite to that of the first direction of rotation previously used to wind the pipe 12.

In other words, there is controlled unwinding of the flexible pipe 12, allowing the pipe 12 to gradually fill with loose material 2.

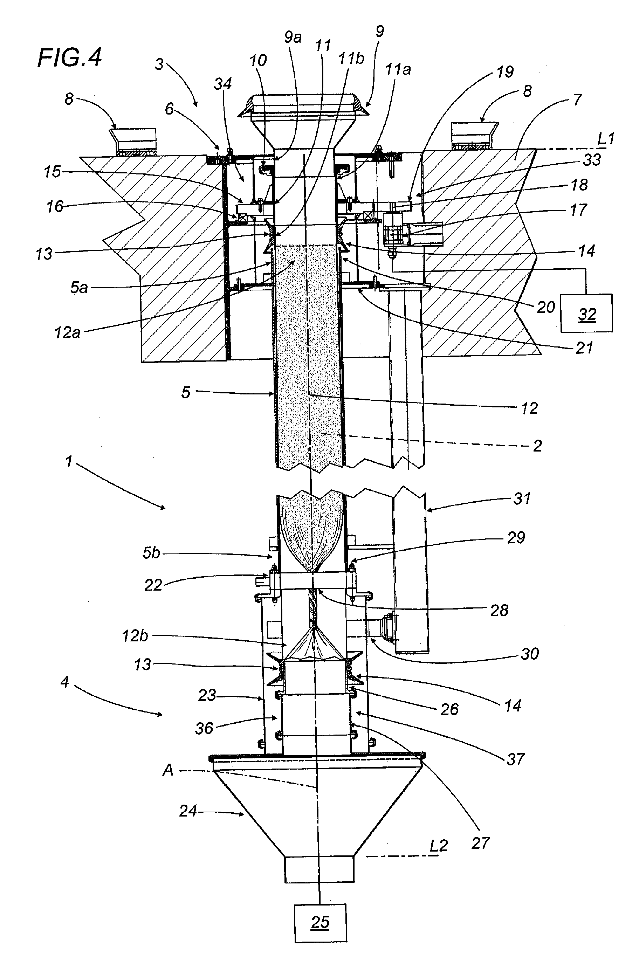

In Figure 4, the flexible pipe 12 is illustrated in a configuration in which, with the diaphragm part 28 in the clamping position, it is substantially as full as it can get.

The function of the diaphragm part 28 is basically to ensure that the flexible pipe 12 unwinds from the top downwards, preventing it from unwinding on both sides, that is to say, from both ends.

Another function of the diaphragm part 28 is, once the pipe is filled to a predetermined level, to prevent the flexible pipe 12 from unwinding independently, irrespective of the rotation of the upper tubular element 11, due to the thrust generated by the mass of loose material 2 present in the pipe 12.

Such an occurrence would introduce unwanted causes of uncertainty in transfer processes which are often extremely delicate and so require strict and effective control. Moreover, such automatic unwinding could be too sudden and could create an excessive drop, to the second hopper 24, for the material 2 descending along the flexible pipe 12.

Advantageously, to avoid such disadvantages, the diaphragm part 28 was introduced and positioned close to the second tubular element 26 so that, when the part 28 is opened, there is a limited drop for the loose material 2 present in the flexible pipe 12.

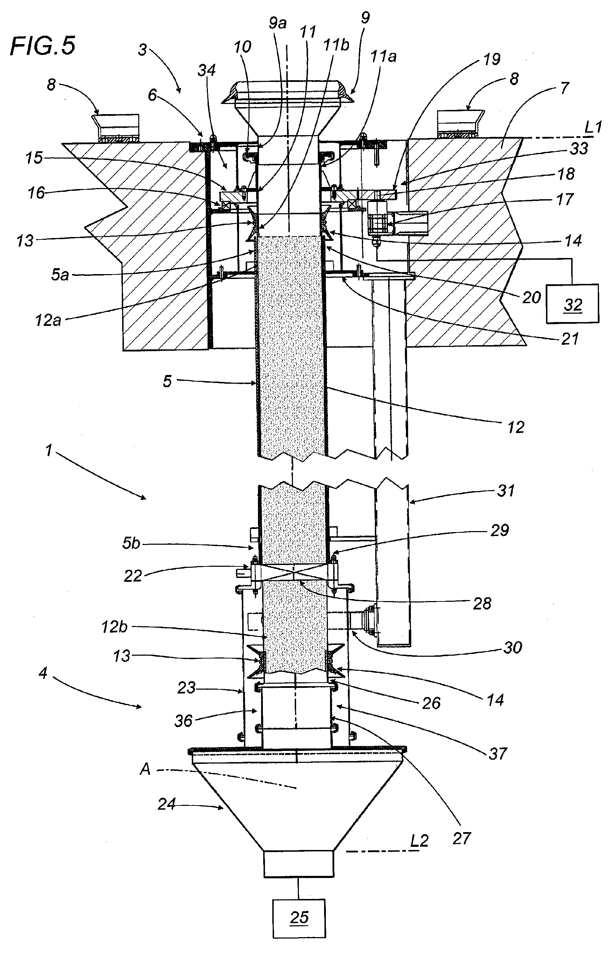

Figure 5 illustrates a configuration in which the flexible pipe 12 is completely open, with the loose material 2 flowing directly from the unloading station 3, located at the upper level L1, to the receiving station 4, located at the lower level L2.

The configuration just described represents a condition in which the transfer of loose material 2 between the stations 3 and 4 is up to speed.

Once the transfer of loose material 2 is complete, and the material 2 has finished flowing along the flexible pipe 12, the sealing unit 30 is moved towards the flexible pipe 12 and activated to close the lower zone of the pipe 12 by sealing it, using known methods and for known purposes, therefore, not described in more detail below.

Then the sealing unit 30 is moved away from the flexible pipe 12 according to known methods, not illustrated, and after the appropriate valve elements not described in this text have been closed, the pipe 12 is removed from inside the rigid pipe 5, without any of the material 2 being dispersed into the environment.

At this point, the apparatus 1 is designed to receive a new flexible pipe 12 for feeding a new loose material 2, which may be different to the material considered so far, and the operating steps described above are repeated.

The term twisting means 34 refers to means designed to turn the two ends 12a, 12b of the flexible pipe relative to one another, in both directions of rotation.

In other words, with reference to the embodiment described above, if the flexible pipe 12 is wound by anti-clockwise rotation of the first tubular element 11 relative to the second tubular element 26 which is fixed, consequently, pipe 12 unwinding occurs with rotation of the first tubular element 11 in the opposite direction, that is to say, clockwise rotation.

The tubular joint 27 with variable extension connected to the second rigid tubular element 26 advantageously allows changes in flexible pipe 12 length along the direction of the axis A to be compensated, the changes in length being a result of the twisting to which the pipe 12 is subjected.

Therefore, the tubular joint 27 forms, for the apparatus 1, means 36 for compensating the change in the length of the flexible pipe 12.

Moreover, thanks to its elastic structure, the tubular joint 27 advantageously allows the flexible pipe 12 to keep its tension within a predetermined range of values, both during winding, and during unwinding and simultaneous filling, and during the step in which the loose material 2 passes through it. Thus, the elastic tubular joint 27 forms, for the apparatus 1, means 37 for tensioning the flexible pipe 12.

According to alternative embodiments of the tensioning means 37 not illustrated, the means 37 comprise joints with variable extension which exert a tensioning action on the flexible pipe 12 by gravity. In other words, the joint does not exert an elastic action on the pipe 12. Instead, the weight force of elements of the joint at least partly free to move along the axis A is applied to the pipe 12.

Advantageously, the presence of the tubular joint 27 with variable extension connected to the second rigid tubular element 26 allows the flexible pipe 12 to maintain its tension within a predetermined range of values, both during winding, and during the unwinding and simultaneous filling step, and during the step in which the loose material 2 passes through it.

Advantageously, in an extremely simple but equally effective manner, the apparatus according to the present invention prevents the material 2 from demixing or being damaged as it is transferred from the unloading station 3 to the receiving station 4 through the above-mention flexible pipe 12.

Advantageously, the present invention also allows the transfer of a loose material 2 from the unloading station 3 to the receiving station 4 in such a way that the material is completely isolated from the surrounding environment and so in such a way as to prevent unwanted diffusions of powders in the environment.

The invention described is suitable for evident industrial applications and may be subject to modifications and variations without thereby departing from the scope of the inventive concept. Moreover, all details of the invention may be substituted with technically equivalent elements.

## Claims

1. An apparatus for transferring loose material (2) from an unloading station (3) located at a first, upper level (L1) to a receiving station (4) located at a second, lower level (L2), comprising a flexible pipe (12) for the passage of the loose material (2), the pipe (12) having an axis (A) of extension and a first end (12a) connected to the unloading station (3) and a second end (12b) connected to the receiving station (4), the apparatus being **characterised in that** it comprises twisting means (34) for the flexible pipe (12), the twisting means (34) being designed to make the ends (12a, 12b) of the pipe (12) rotate relative to one another about the pipe (12) axis of extension (A).

2. The apparatus according to claim 1, **characterised in that** it comprises blocking means (29) designed to clamp the flexible pipe (12) in a closed configuration in which the passage of the loose material (2) is inhibited, the blocking means (29) acting on the pipe (12) close to the second end (12b) connected to the receiving station.

3. The apparatus according to claim 2, **characterised in that** the blocking means (29) comprise a diaphragm part (28), which can be activated at least between a first, clamping configuration in which the flexible pipe (12) is substantially blocked and a second, open configuration in which the flexible pipe (12) allows the passage of the loose material (2) and can be twisted following relative rotation of the ends (12a, 12b) of the pipe.

4. The apparatus according to any of the claims from 1 to 3, **characterised in that** the unloading station (3) and the receiving station (4) respectively comprise a first (11) and a second (26) rigid tubular element, the ends (12a, 12b) of the flexible pipe (12) being removably attached to the rigid tubular elements (11, 26).

5. The apparatus according to claim 4, **characterised in that** the twisting means (34) comprise a motor (17) for rotating at least one of the rigid tubular elements (11, 26) relative to the axis (A), and means (33) for transmitting motion between the motor (17) and said at least one tubular element (11, 26).

6. The apparatus according to claim 5, **characterised in that** the means (33) for transmitting motion comprise a flanged element (15) coaxially fixed to the outside of at least one tubular element (11, 26).

7. The apparatus according to claim 6, **characterised in that** the means (33) for transmitting motion comprise a pinion (19) fitted to a motor (17) rotary shaft (18), the pinion (19) engaging with the flanged element (15).

8. The apparatus according to claim 6, **characterised in that** the means (33) for transmitting motion comprise a wheel fitted to a motor (17) shaft (18), the wheel being kinematically connected to the flanged element (15) by a flexible transmission part.

9. The apparatus according to any of the claims from 1 to 8, **characterised in that** it comprises a sealing unit (30) for the flexible pipe (12), the sealing unit (30) being designed to seal the pipe (12) in a predetermined position located between the first end (12a) and the second end (12b).

10. The apparatus according to any of the claims from 1 to 9, **characterised in that** it comprises a unit (32) for control and command of the relative rotation of the rigid tubular elements (11, 26), the unit regulating the rotation of at least one of the tubular elements (11, 26) to guarantee gradual filling of the flexible pipe (12) by gravity along the axis (A).

11. The apparatus according to claim 10 when dependent on claim 5 or 6, **characterised in that** the control and command unit (32) is connected to and acts on the motor (17).

12. The apparatus according to any of the claims from 1 to 11, **characterised in that** it comprises means (36) for compensating the change in the length of the flexible pipe (12) along the axis (A) following pipe (12) twisting.

13. The apparatus according to claim 12, **characterised in that** the means (36) for compensating the change in length comprise a tubular joint (27) with variable extension connected to one of the rigid tubular elements (11, 26) and designed to change its extension along the axis (A) of extension following flexible pipe (12) twisting.

14. The apparatus according to claim 13, **characterised in that** the tubular joint (27) with variable extension is an elastic joint.

15. The apparatus according to claim 13, **characterised in that** the tubular joint (27) with variable extension is a telescopic joint.

16. The apparatus according to any of the claims from 1 to 15, **characterised in that** it comprises means (37) for tensioning the flexible pipe (12).

17. The apparatus according to any of the claims from 4 to 16, **characterised in that** it comprises at least one elastic ring (13) for airtight locking, to removably connected the ends (12a, 12b) of the flexible pipe (12) to the rigid tubular elements (11, 26).
